# EUROPEAN PATENT APPLICATION

(11) **EP 0 547 661 A1**
(43) Date of publication of application: **23.06.1993**
(21) Application number: 92203757.7
(22) Date of filing: 04.12.1992
(51) Int. Cl.: H01M 2/26, H01M 2/28, H01M 10/04

(54) **Electrical storage battery**

(30) Priority: 19.12.1991 US 810088
(71) Applicant: GENERAL MOTORS CORPORATION, Detroit Michigan 48202 (US)
(72) Inventor: Mix, Renard Eugene, Yorktown, Indiana 47396 (US); Crisler, Stephen Thomas, Noblesville, Indiana 46060 (US)
(74) Representative: Jehan, Robert (GB)

(57) **Abstract**

Lead-based battery terminals (10,10') are moulded into a battery case (26) so that only the outer ends (18) of the terminal units are external to the case (26). The terminals (10,10') have elongated straps (12) internal of the case (26) slotted to receive projecting lugs (42,44) integral with positive and negative interleaved electrode plates (34-40). After the plates (34-40) and separators (55) are installed, with the electrode plate lugs (42,44) fitted in the slots (14,14') of the straps (10,10'), glass beads (52) are inserted in the void areas to support the lugs. The case (26) is subsequently closed in substantially water-tight manner and then partially inserted in a tank (60) of circulating cooling water for preventing heat damage to the case (26). A low voltage magnetic induction heater is then electrically energized to heat the strap and lugs to fuse these together.

## Description

This invention relates to an electrical storage battery, to a method of making an electrical storage battery and to a method of joining spaced metallic electrode plates to a battery terminal.

Bi-polar lead-acid and other electric charge storage batteries have generally been built with positive and negative electrode plates interleaved with one another and with glass mat separators all operatively mounted within an acid resistant battery case of polypropylene or other suitable material which is heat sensitive to the prior terminal-electrode plate amalgamation processes. Such batteries also have various fluid sealing structures and arrangements and employ various methods of sealing that prevent or reduce the escape of electrolyte therefrom.

While such batteries have been generally acceptable and have met requirements, new and improved constructions and methods are desired to meet higher standards for new and improved fluid sealed batteries with cases that are not damaged by the heat required for terminal strap-lug fusion.

The present invention seeks to provide an improved storage battery and method of making such a storage battery.

According to an aspect of the present invention, there is provided a method of joining spaced metallic electrode plates mounted in a battery case to a battery terminal as specified in claim 1.

According to another aspect of the present invention, there is provided a method of making an electrical storage battery as specified in claim 8.

According to another aspect of the present invention, there is provided an electrical storage battery as specified in claim 10.

In a preferred embodiment, a polypropylene case for a storage battery is moulded with electrical terminals therein so that the terminals are completely surrounded by (for example, embedded in) the material of the case so that there will be no significant leakage of the electrolyte from the case after the battery has been completely assembled.

Advantageously, the positive and negative terminal units include elongate straps extending internally of the case and slotted to form channels therein to receive respective projecting lugs of corresponding internal positive and negative polarity lead-based electrode plates interleaved with one another and with glass mat separators.

The plates and separators are preferably installed in the case, with the extending electrode plate lugs appropriately fitted in the channels of the straps. In an embodiment, the case is then closed by a cover plate which is heat sealed thereto to form a substantially water-tight assembly, having amalgamation gas escape vent holes strategically located therein. Subsequently, the closed case is preferably partially immersed in a tank containing a level of circulated cooling water supplied thereto without water leakage into the sealed case. With the polypropylene case being cooled by the circulated water to prevent heat damage thereto, a low voltage magnetic induction welding head assembly mounted within the tank can be energized to provide a high frequency welding field to heat the strap and the lugs of the electrode plates of one polarity in a burn zone so that the lugs and strap fuse together.

Advantageously, the case is then turned 180 degrees and the strap and lugs of the electrode plates of a second polarity are fused together in a second burn operation. Preferably, the case is then removed from the tank and conveyed to a station where the electrolyte may be added through vent holes in the case, which are then sealed. One-way valving is preferably provided in the casing to allow a low pressure gas build up and release at the maximum allowed pressure.

In an embodiment, flux and glass beads are inserted and packed in void areas in a strap-lug amalgamation zone (that is, in and about the lugs in the channel) before sealing the cover to the case. The burn zone is preferably cleaned by the flux during burning while the lugs are laterally supported with respect to one another by the glass beads.

An embodiment of the present invention is described below, by way of example only, with reference to the accompanying drawings, in which:
Figure 1 is a perspective view of an embodiment of battery terminal unit;
Figure 2 is a sectional view with parts broken away of a battery case showing the battery terminal units of Figure 1 moulded therein;
Figure 3 is a sectional view of a battery case showing electrode plates and interlayered mats installed therein;
Figure 4 is a plan view with parts broken away of the battery case of Figure 2 showing terminal units moulded therein;
Figure 5 is a sectional view of the lower half of the battery case of Figure 3 showing electrode plates and mats stacked in the battery case and beads packed between lugs and with a cover plate heat-welded to close the battery case;
Figure 6 is a sectional view of the lower half of the battery case of Figure 3 showing the battery case positioned on an induction weld mechanism in a tank of cooling water before amalgamation of electrode plate lugs to an associated strap; and
Figure 7 is a sectional view of the apparatus of Figure 6 illustrating the amalgamation of lower lugs of the electrode plates of one polarity to an associated strap by the induction welding mechanism of Figure 6 and upper lugs ready to be subsequently amalgamated to an associated strap.

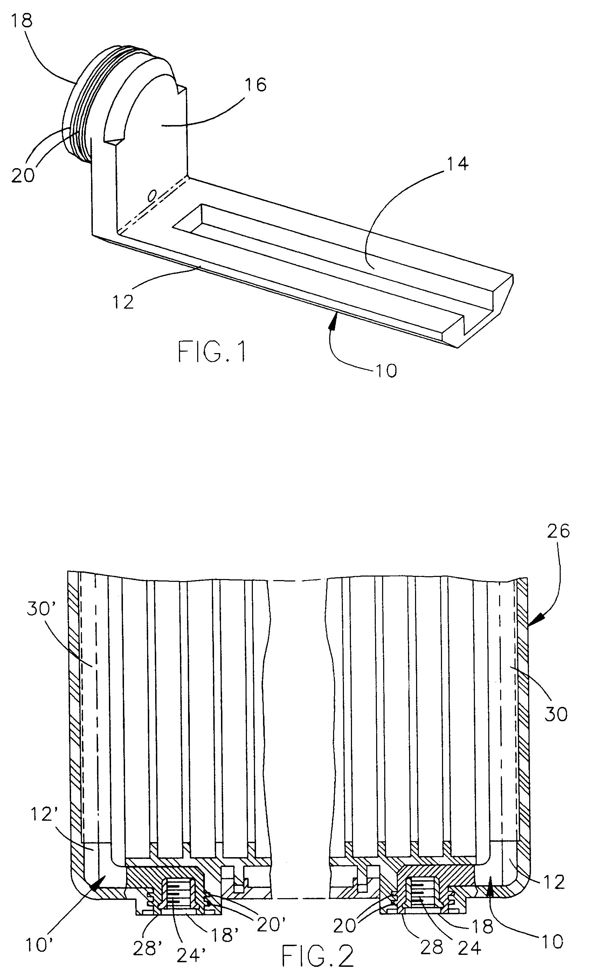

Referring to Figure 1, there is shown a moulded lead-based terminal unit 10 formed with an elongated linear strap 12 having an elongate channel 14 therein which opens at one end of the strap 12 and extends therefrom to a portion 16 of the terminal unit 10. The portion 16 includes at an end remote from the linear strap 12 an outwardly projecting cylindrical connector terminal 18. The connector terminal 18 includes external cylindrical fluid seal rings 20 and is internally threaded at 24 (see Figure 2) to receive conventional threaded fasteners used to attach the terminal unit 10 to leads for connection to the electrical system with which the battery is to be used.

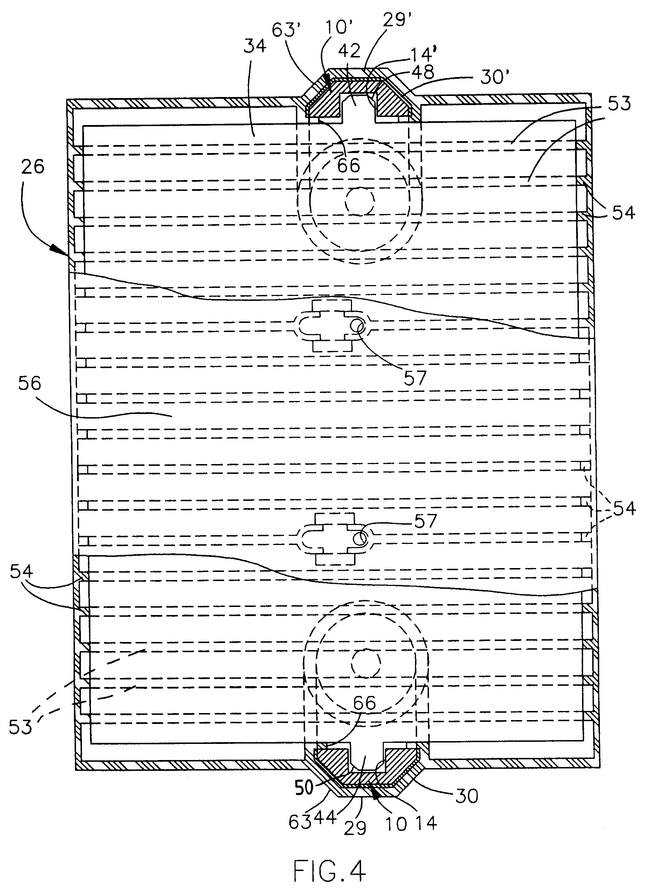

In the preferred embodiment, each battery includes two terminal units 10 and 10', best seen in Figure 2, which are moulded within a main case 26 of polypropylene or other suitable material which is not corroded or otherwise degraded by the electrolyte used in the storage battery. With the exception of the outer end portions 28, 28' of the terminals that are internally threaded, the terminal units 10, 10' are moulded in the case material and reside completely inside of the main battery case 26. Wall portions 29, 29' (see Figure 4) of the battery case 26 capture and retain the strap portions of the terminals in position within the case 26.

Annular seal rings 20, 20' associated with respective connector terminals 18, 18' are designed to fit in a fluid tight manner as are the other portions of the terminal units 10, 10' when the case shrinks, following moulding thereof, around the terminal units, thereby ensuring that there is no leakage of the electrolyte from the battery to the exterior thereof once it has been completely assembled.

Preferably, a suitable thin heat insulating shell 30, 30' is disposed around the outer peripheral areas of the straps 12, 12' to insulate the battery case 26 from heat degradation during the amalgamation of the lugs of the electrode plates to the straps of the terminal units, described below.

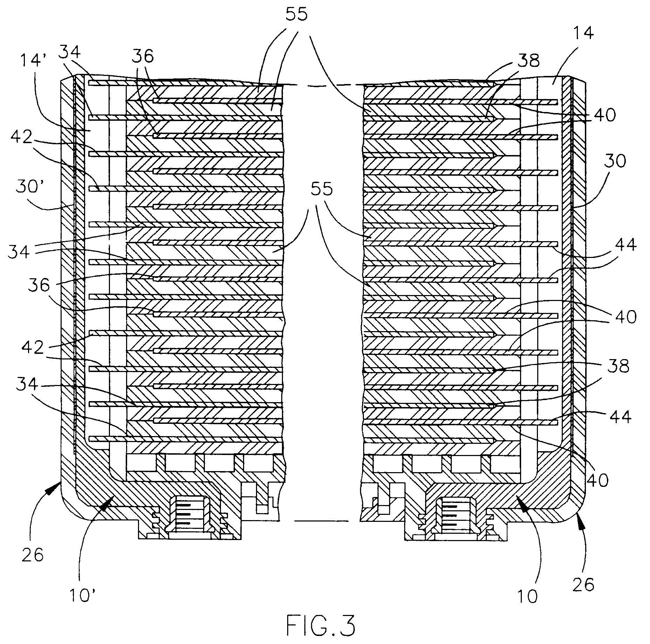

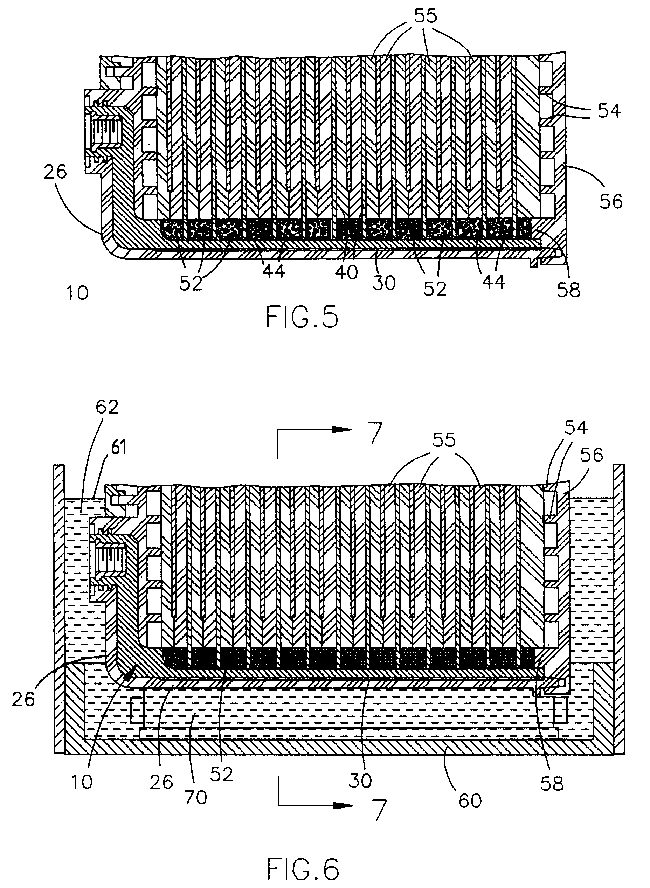

Referring to Figure 3, there are illustrated positive and negative electrode plates 34, 36 in the left hand portion of this Figure and positive and negative electrode plates 38, 40 in the right hand portion of the Figure. The positive and negative electrode plates include connector lugs 42, 44 adapted to fit within the elongated channels 14, 14' formed in the straps of the terminal units 10, 10'. As shown best in Figures 3 and 4, the lugs 42, 44 are integral with and extend beyond the main body of each respective plate 34, 40 and are formed with bevelled edges 48, 50 to cooperate with the respective channels 14, 14' in the terminal units to provide space for insertion of generally spherical glass beads 52, described below in conjunction with Figures 5 to 7. The straps themselves are nested in elongated protruding wall portions 63 and 63' and are held therein by retainer channels 66.

Referring to Figures 5 to 7, glass beads 52, when added in sufficient quantity, support and protect the plate lugs 44 and side walls of the terminal strap 12 during the heating and melting of the lug-strap alloy and are effective to support the near molten lugs 44 as the burn progresses and molten lead of the strap 12 runs into the channel 14 thereof allowing effective heat transfer from the molten strap alloy into the lugs 44 so that they also become molten, beginning at the tips thereof. The glass beads 52, while rising to the top of the melt, also serve as a heat distributing medium and allow sufficient time for the plate strap 12 to melt more uniformly from one end to the other, thereby to fill the channels progressively.

The glass beads 52 can also be effectively used to carry the flux into the burn zone to clean the zone while supporting and protecting the plate lugs 44 and side walls of the terminal strap 12 during the heating and melting of the plate strap metal. In this bead-flux mixture, the glass beads 52 still act as the heat distributing medium to allow time for the plate strap 12 to melt more uniformly from one end to the other to fill the channels 14 in the straps 12 and amalgamate with the lugs 44.

The glass beads 52 advantageously alter the molten lead surface tension at the melting zone of the lugs 44 while they still support the soft un-melted portion of the lugs. With the molten lead in motion incident to the inductive melting, any other lead in contact with it melts more readily than if it is stationary. The glass beads 52 control this lead in motion in this application by causing the molten lead to flow into the channel 14 and rise more uniformly around and between the lugs 44, melting them as the lead rises to the level provided by the mat. During amalgamation, the glass beads 52 rise to the top of the melt.

As shown in Figures 4 to 6, the main case 26 is moulded with elongated spacers 53 which run across the main width of the body and spacers 54 which extend up the sides thereof to space the electrode plates and separate mats 55 from the walls of the case.

In the build of the battery, glass mat separators 55 are interleaved between the positive and negative electrode plates until the main case is filled with these battery elements. During this assembly, the lugs 42, 44 of each of the outer positive and negative electrode plates are interfitted in the channels of their associated straps 12. With the battery case 26 shown in Figures 3 and 4, the beads 52 and a suitable flux such as azelaic powder are added by feeder tubes or other suitable means into the channel 14 of the strap 12. The glass beads 52 are sufficiently small to fill all of the void areas between the lugs 44 and the walls of the lead based strap 12 to support and protect the plate lugs 44 and side walls of the terminal straps during the heating and melting of the plate strap lead alloy.

After the glass beads and flux have been applied in the melt zone, the case cover 56 of polypropylene is aligned with and heat-sealed to the main body 26 by heat welding or by any other suitable means. Temporary openings 57 in the case cover (see Figure 4) allow the escape of gases during welding. These openings 57 are also used as access openings for the supply of electrolyte to the glass mats within the case in a later operation. After sufficient electrolyte has been added, the openings 57 are closed by heat sealing or by any other suitable method.

The case cover 56 is formed with channel blocks 58 which act as stoppers for the end of the channels 14, 14' to prevent the escape of beads 52 and flux from the regions between the lugs 44.

After this installation, the battery is ready for the burn of the terminal straps 12 to the electrode plate lugs 44 in a manner which does not damage the polypropylene battery case (26,56).

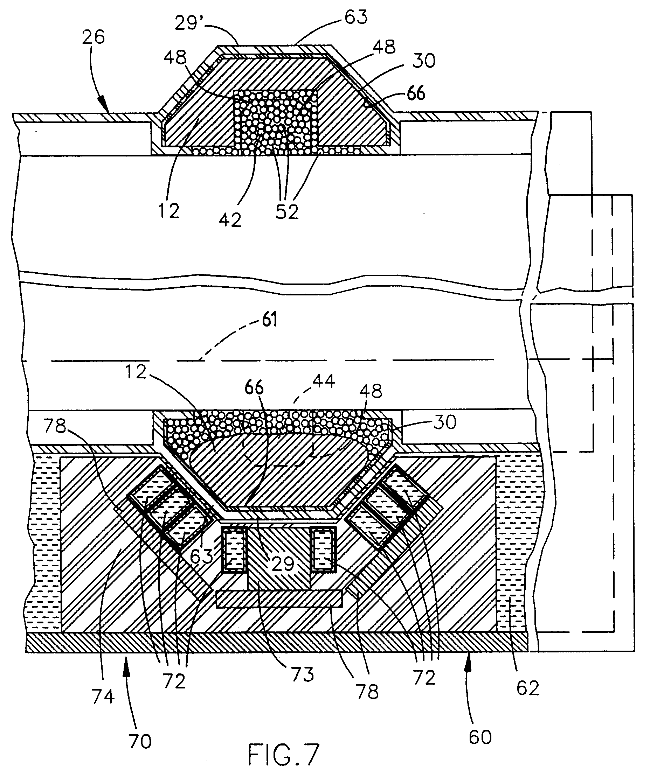

The burning procedure is illustrated in Figures 6 and 7 in which the battery case 26, which is already sealed to the cover 56, is seated in a tank 60 which is partially filled to a predetermined level 61 with deionized water 62 circulated thereto from a suitable source (not shown). The case has elongated protruding wall portions 63 conforming substantially to the shape of the straps 12 and form internal retainer channels 66 to accommodate the straps 12, 12' which fit therein and, along with the insulator material 30, serve as moulds for containing the molten metal during the welding operation. These wall portions 63 are cradled by an elongated induction coil assembly 70 mounted within the body of water and supported by the bottom of the tank 60, out of contact with the parts to be amalgamated.

As mentioned above, the heat used for amalgamation of the lugs 44 to the strap 12 is obtained from induction heating generated by the induction coil assembly 70. A power supply unit, not illustrated, provides a high frequency low voltage current which flows through the water-cooled tubular coils 72 of the induction coil assembly 70 to create a magnetic field around the strap 12 to be amalgamated with the lugs 44.

When an electrically conductive object such as the strap 12 and lugs 44 are exposed to such a magnetic field, an electromotive force is induced in the conductive material. This sets up a current flow therein and the resistance of the strap 12 to the flow of current causes instant and somewhat localised heating to occur. The heat is relatively near the surface of the metal and any interior heating results from thermal conduction from the hot surfaces of the tabs and the adjacent areas of the strap 12.

The power supply for the high frequency current may be a motor generator or any other suitable source. The induction coil assembly includes turns of insulated water-cooled copper tubing 72 around an iron core 73 encased in a suitable block 74 of a binder such as iron ferrite and epoxy. The tubing 72 provides an internal passage for circulation of cooling water to keep the work coil cool during operation. The number of turns of copper tubing of the block 74 is governed by the heat zone to be developed. Metallic magnetic flux reflectors 78 embedded in block 74 direct the field to the amalgamation zone.

Heat input is also regulated to some extent by varying the gap between the induction coil assembly and the parts to be amalgamated.

As indicated above, heat energy is generated to amalgamate the lugs 44 and straps 12 together without heat damage to the case of plastics material. The coil is subsequently deenergized and the case inverted and the other end thereof placed in the tank so that the other strap 12' and the associated lugs 42 can be amalgamated in the same manner to complete the connection.

During amalgamation the glass beads, if fused, rise to the upper surface of the melt and some may crystalize in this position.

## Claims

1. A method of joining spaced metallic electrode plates (34-40) mounted in a battery case (26) of heat sensitive material to a battery terminal (10,10'), each of which plates includes a main body portion and lug (42,44) projecting from the main body portion into a channel (14,14') formed in an elongate strap portion (12,12') of a battery terminal (10,10') mounted in the battery case; comprising the steps of placing the strap and battery case into a liquid coolant (62) and into the magnetic field of an electrical induction heater (72-74); energizing the induction heater to apply heat energy to the strap to cause portions of the strap to become molten and to fuse with the lugs to effect the connection of the strap to the plates while the battery case is substantially protected from thermal degradation by the liquid coolant.

2. A method according to claim 1, wherein the strap is embedded in the heat sensitive material.

3. A method according to claim 1 or 2, comprising the steps of placing a heat insulating particulate material (52) in the channel (14,14') between the spaced lugs (42,44).

4. A method according to claim 3, wherein the heat insulating particulate material (52) is provided in sufficient quantity to support and insulate the lugs and the channel of the strap.

5. A method according to claim 3 or 4, wherein the insulating particulate material (52) includes a flux for facilitating the fusion of the lugs and the strap.

6. A method according to any preceding claim, comprising the steps of fluxing the channel and the lugs before joining the channel and lugs together.

7. A method according to any preceding claim, wherein the liquid coolant (62) is water.

8. A method of making an electrical storage battery which includes a case of heat sensitive material; comprising the steps of moulding the case (26) with at least one lead-based battery terminal (10,10') embedded in at least one wall of the case, the or each terminal including a strap (12) extending internally in the case and a terminal portion (18) extending through the or a wall in a fluid tight manner, the strap including an elongate channel (14) therein; providing a plurality of positive and negative polarity electrode plates (34-40), each of the positive and/or negative polarity electrode plates including a body portion and a lug (42,44) extending from the body portion; alternately interleaving positive polarity plates with negative polarity plates and a porous separator (55) between adjacent plates and positioning the interleaved plates in the case so that the lugs extend into the channel in the or a respective strap and the separators lie substantially contiguous to the channel so as to form a closure therefor; and joining the positive and/or negative polarity plates by a method according to any preceding claim.

9. A method according to claim 8, wherein for a battery which includes electrode plates having lugs extending to opposite sides of the case; the method includes the steps of joining one strap to its associated plurality of lugs, inverting the case so that a second strap is disposed adjacent to the electrical induction heater, and joining the second strap to its associated plurality of lugs.

10. An electrical storage battery comprising a case including walls (26) of a thermoplastics material, a first group of spaced plates (34-36) having a first electrical polarity mounted in the case, a second group of spaced plates (38,40) having a second electrical polarity opposite to the first polarity and interdigitated with the first group of plates, a separator (55) separating adjacent plates, the first polarity plates including lugs (42,44) joined to an electrical terminal (10) formed of a head portion (18) disposed externally of the case and an elongated strap portion (12) extending from the head portion internally of the case and substantially contiguous to a wall of the case, the strap portion including an elongate channel (14) therein for receiving the lugs prior to welding of the lugs to the strap portion.

11. An electrical storage battery according to claim 10, comprising a second electrical terminal (10') which includes an elongate strap portion (12') having a channel (14') therein, lugs (42) on the second electrical polarity plates being received in the channel (14') and being welded to the strap portion of the second electrical terminal.

12. An electrical storage battery according to claim 10 or 11, wherein the or each electrical terminal is made of lead alloy.
